# EUROPÄISCHE PATENTSCHRIFT

(11) **EP 1 245 950 B1**
(45) Veröffentlichungstag und Bekanntmachung des Hinweises auf die Patenterteilung: **26.10.2005**
(21) Anmeldenummer: 01106636.2
(22) Anmeldetag: 16.03.2001
(51) Int. Cl.: G01N 23/18, G01N 23/04, B22D 11/18, B22D 11/20, G06T 7/00, G06T 11/00

(54) **Verwendung eines zylinderförmigen Testkörpers und Verfahren zum Herstellen desselben**
Method of using a cylindrical test body and method for manufacturing the same
Méthode d' utlilisation d' un object de test et méthode pour la réalisation de celui-ci

(43) Veröffentlichungstag der Anmeldung: 02.10.2002
(73) Patentinhaber: YXLON International X-Ray GmbH, 22419 Hamburg (DE)
(72) Erfinder: Heike, Uwe, Dr., 25462 Rellingen (DE); Weiss, Ingo, 22299 Hamburg (DE); Bavendiek, Klaus, Dr., 22851 Norderstedt (DE)
(74) Vertreter: Schnekenbühl, Robert Matthias L.

(56) Entgegenhaltungen:
- US-A- 4 818 943
- US-A- 5 165 050
- MERY D ET AL: "VERFOLGUNG VON GUSSFEHLERN IN EINER DIGITALEN ROENTGENBILDSEQUENZ: EINE NEUE METHODE ZUR AUTOMATISIERUNG DER QUALITAETSKONTROLLE VON GUSSTEILEN FLAW TRACKING IN A SEQUENCE OF DIGITAL X-RAY IMAGES: A NEW METHOD OF AUTOMATED QUALITY CONTROL OF CASTINGS" TECHNISCHES MESSEN TM, R.OLDENBOURG VERLAG. MUNCHEN, DE, Bd. 67, Nr. 4, April 2000 (2000-04), Seiten 160-165, XP000966288 ISSN: 0171-8096
- NOBLE J A ET AL: "HIGH PRECISION X-RAY STEREO FOR AUTOMATED 3-D CAD-BASED INSPECTION" IEEE TRANSACTIONS ON ROBOTICS AND AUTOMATION, IEEE INC, NEW YORK, US, Bd. 14, Nr. 2, 1. April 1998 (1998-04-01), Seiten 292-302, XP000754935 ISSN: 1042-296X

## Beschreibung

Die Erfindung betrifft die Verwendung eines zylinderförmigen Testkörpers mit einem oder mehreren kugelförmigen Hohlräumen zur Prüfung der Funktion und Fehlererkennungsqualität von Systemen zur visuellen oder automatischen Erkennung von Defekten in Gußteilen und Verfahren zu seiner Herstellung.

Moderne Systeme zur automatischen Erkennung von Defekten in Gußteilen, sogenannten ADR-Systemen (ADR=Automatic Defect Recognition) müssen immer kleinere Fehler zuverlässig erkennen. Kleinste Störungen und Schwächungen in der Signalkette können bereits dazu führen, daß Fehlstellen nicht mehr sicher detektiert werden. Gleichzeitig bedarf das heute angewandte Verfahren, anhand von Filmaufnahmen in 2D auf 3D Fehler und -Fehlergrößen zu schließen, einer praxisgerechten Anpassung, damit schon im Vorfeld der Auslegung einer ADR-Anlage eine belastbare Aussage über die mögliche Erkennungsqualität gemacht werden kann.

Bei herkömmlich angewendeten Methoden wird die Funktion der Anlage mit
1. Drahtstegen, z.B. DIN 54109 oder Platin Doppeldrahtstegen (Entwurf einer Norm mit Nr. EN 13068-3 liegt vor),
2. mittels mit definierten Bohrungen versehen Prüfteilen
   oder
3. auf Prüfteilen aufgebrachten Lochblechen, z.B. ASTM E155, getestet.

Alle diese Prüfmöglichkeiten sind wenig praxisgerecht. Der erste Ansatz testet nur die Auflösung und kann nicht zur Detektion genutzt werden. Der zweite Ansatz ist kaum reproduzierbar, da die Bohrtiefen recht individuell eingestellt werden, das Bohrloch konisch zuläuft und durch die zylindrische Form der Bohrung die Durchstrahlrichtung einen starken Einfluss auf die Erkennbarkeit hat. Die dritte Möglichkeit, der Test mit Penetrameter, leidet unter dem gleichen Problem, daß die detektierbare Größe der Objekte aufgrund der zylindrischen Geometrie stark von der Durchstrahlrichtung abhängt. Zudem liefern die scharfen Ränder der Bohrungen Kontraste, die nicht der Praxis der 3D Fehler entsprechen. Die erste und dritte Methode leidet weiter darunter, daß die Prüfkörper nicht fest auf dem in der Anlage zu prüfenden Teil aufgebracht werden können und dann eine automatische Kalibrierung der Anlage zu ermöglichen. Der Erfindung liegt deshalb die Aufgabe zugrunde, die Prüfmöglichkeiten für Funktion und Fehlererkennungsqualität von ADR-Systemen zu verbessern und ein wirtschaftliches Verfahren zur Herstellung der dazu eingesetzten Testkörper zu schaffen.

Diese Aufgabe wird in überraschender Weise gelöst durch die Verwendung eines zylinderförmigen Testkörpers mit einem kugelförmigen Hohlraum zur Prüfung der Funktion und Fehlererkennungsqualität von Systemen zur automatischen Erkennung von Defekten in Gußteilen, der auf oder in dem zu prüfenden Gußteil befestigt wird.

Erfindungsgemäß wurden also Testobjekte bzw. -Körper kreiert, die die Form natürlicher Fehler besser approximieren und einfach, sowie kostengünstig reproduzierbar herzustellen sind. Diese Testkörper enthalten einen oder mehrere kugelförmige Hohlräume von ggf. unterschiedlicher Größe und Lage.

Insofern ermöglicht die Erfindung also den Verzicht auf Drahtstege, definierte konische Bohrungen und den Einsatz von Lochblechen.

Das erfindungsgemäße Verfahren zum Herstellung des angesprochenen zylinderförmigen Testkörpers besitzt die folgenden drei Alternativen:
a1: Einstanzen von kreisförmigen Löchern, deren Durchmesser die Form einer Kugel optimal approximieren, in die Mitte einer Vielzahl von Folienlagen, die aus dem Material eines zu prüfenden Gußstückes bestehen,
b1: übereinander Anordnen der Vielzahl von Folienlagen mit den eingestanzten Löchern, wobei angrenzend an die Folienlagen mit dem kleinsten Loch Folienlagen ohne Loch übereinander gelegt werden,
c1: Zusammenpressen oder Verkleben der übereinander liegenden Vielzahl von Folienlagen,
oder
a2: Vorsehen von zwei zylinderförmigen Testkörperstücken mit gleichem Durchmesser,
b2: Hineinbohren einer halbkugelförmigen Aussparung in einer Stirnseite jedes zylinderförmigen Testkörperstücks,
c2: Zusammenbau mittels Verkleben der Testkörperstücke an ihren Stirnseiten,
oder
b3: Vorsehen einer kreisringförmigen Ausnehmung in einem Testkörperstück und Vorsehen eines entsprechenden kreisringförmigen Einsatzstückes gegenüberliegend auf einem anderen Testkörperstück, sowie Hineinbohren einer halbkugelförmigen Aussparung in gegenüberliegende Seiten des Testkörperstücks bzw. des kreisringförmigen Einsatzstükkes, und
c3: Hineinpressen des kreisringförmigen Einsatzstückes in die kreisringförmige Ausnehmung.

Im folgenden werden verschiedene Ausführungsbeispiele anhand der Zeichnung näher beschrieben. Diese sollen dem besseren Verständnis der Erfindung dienen; die Erfindung ist jedoch hierauf nicht beschränkt.

Es zeigt:
- Fig. 1a: eine perspektivische Ansicht eines erfindungsgemäß verwendeten Testkörpers im Aufbau nach dem Folienprinzip,
- Fig. 1b: eine Querschnittsansicht des in Fig. 1a gezeigten Testkörpers,
- Fig. 2a: eine schematische Perspektivansicht eines weiteren, noch nicht zusammengesetzten Testkörpers nach dem Halbkörperprinzip,
- Fig. 2b: eine schematische Querschnittsansicht durch den in Fig. 2a gezeigten Testkörper,
- Fig. 3: eine schematische Querschnittsansicht durch eine weitere Ausführungsform des erfindungsgemäßen Testkörpers vor seinem Zusammensetzen,
- Fig. 4a: eine perspektivische Ansicht einer weiteren Ausführungsform eines erfindungsgemäßen Testkörpers mit mehreren kugelförmigen Hohlräumen vor dem Zusammenbau, und
- Fig. 4b: einen Schnitt in horizontaler Richtung durch den in Fig. 4a gezeigten Testkörper.

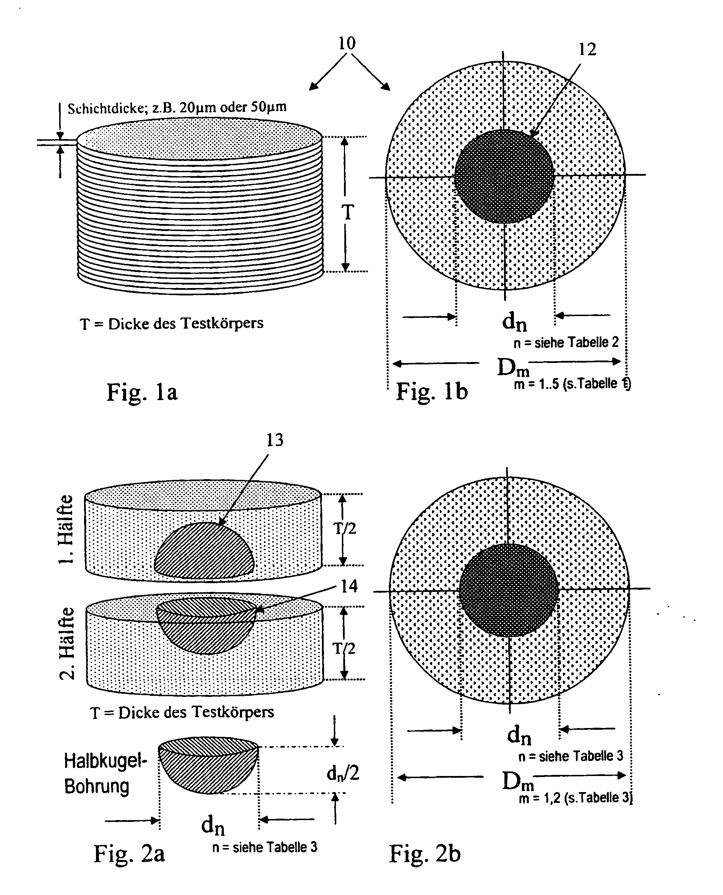

In Fig. 1 ist der nach der ersten Herstellungsvariante produzierte zylinderförmige Testkörper allgemein mit 10 bezeichnet. Er weißt über 20 Folienlagen auf, die deckungsgleich übereinander gelegt worden sind und insgesamt eine Dicke = T des Testkörpers 10 ausbilden, wobei die Schichtdicke der einzelnen Folie beispielsweise 20µm oder 50µm betragen kann. Es dürfte einleuchten, daß andere Werte ohne weiteres denkbar sind.

In der Fig. 1b ist das mittig in jede Folie eingestanzte Loch allgemein mit 12 bezeichnet. Die jeweiligen Durchmesser für die Folie bzw. das jeweilige Loch (Dₘ,dₙ) sind in der Tabelle 1 bzw. 2 angegeben.

Aus einem Satz von 100 Folien mit z.B. je 20 µm Dicke und ausgestanzten Löchern mit Durchmessern, wie in Tabelle 2 gezeigt, lassen sich von 0,2 mm bis zum maximalen Durchmesser alle gewünschten Hohlraumgrößen für einen Testkörper mit 2 mm Dicke aufbauen. Die übereinander angeordneten Folienlagen können durch zwei Kunststoff- oder Aluminiumplatten mit je einer Schraube an jeder Ecke zusammengepreßt werden oder sie werden mit einem Klebstoff, der kaum röntgenabsorbierend ist, verklebt. Das Material der Folienlagen entspricht dem zu testenden Material, z.B. Aluminium. Es dürfte einleuchten, daß die Testkörper an geeigneter Stelle auf oder in dem zu prüfenden Gußteil befestigt werden.

Bei der zweiten Verfahrensvariante werden in zwei zylinderförmigen Testkörperstücken jeweils zwei halbkugelförmige Löcher oder Aussparungen 13,14 eingebracht, so daß beim Zusammenbau ein kugelförmiger Hohlraum entsteht, wie dieses in Fig. 2a angedeutet ist. Die Festkörperstücke werden dann verklebt.

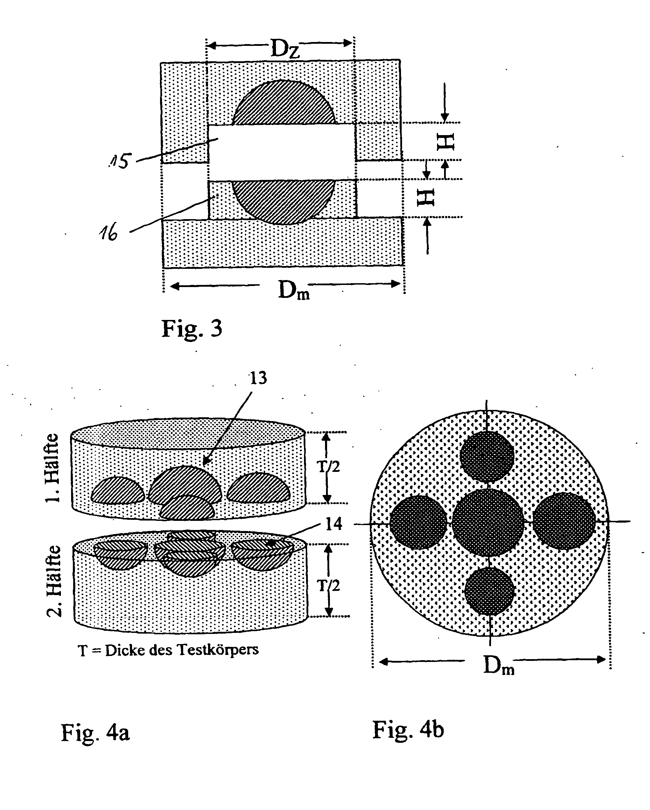

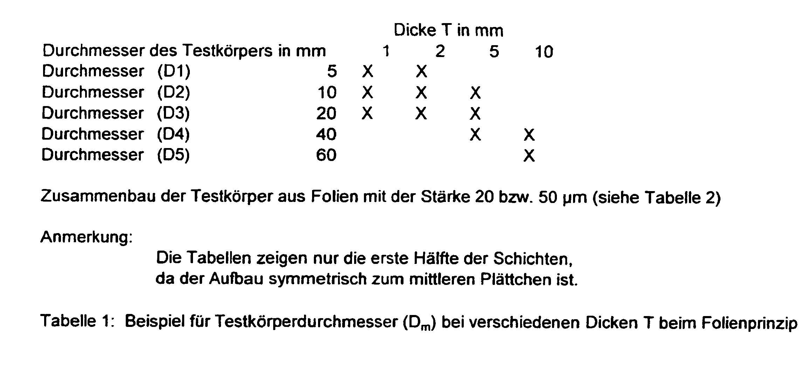

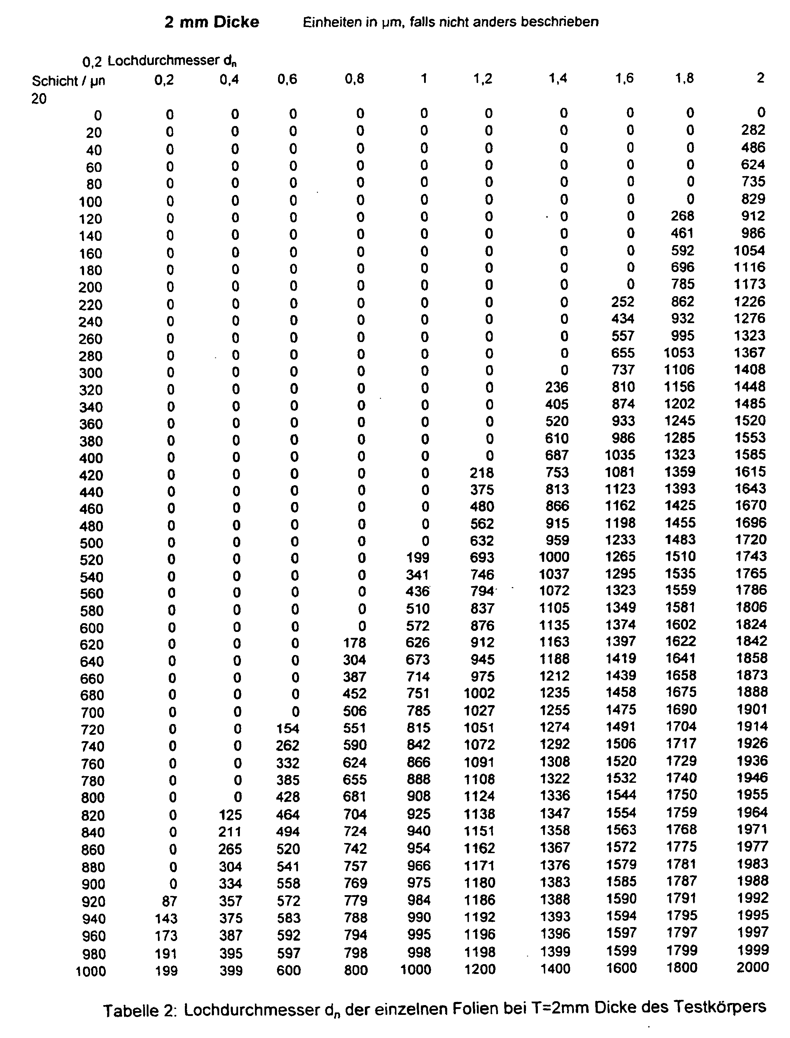

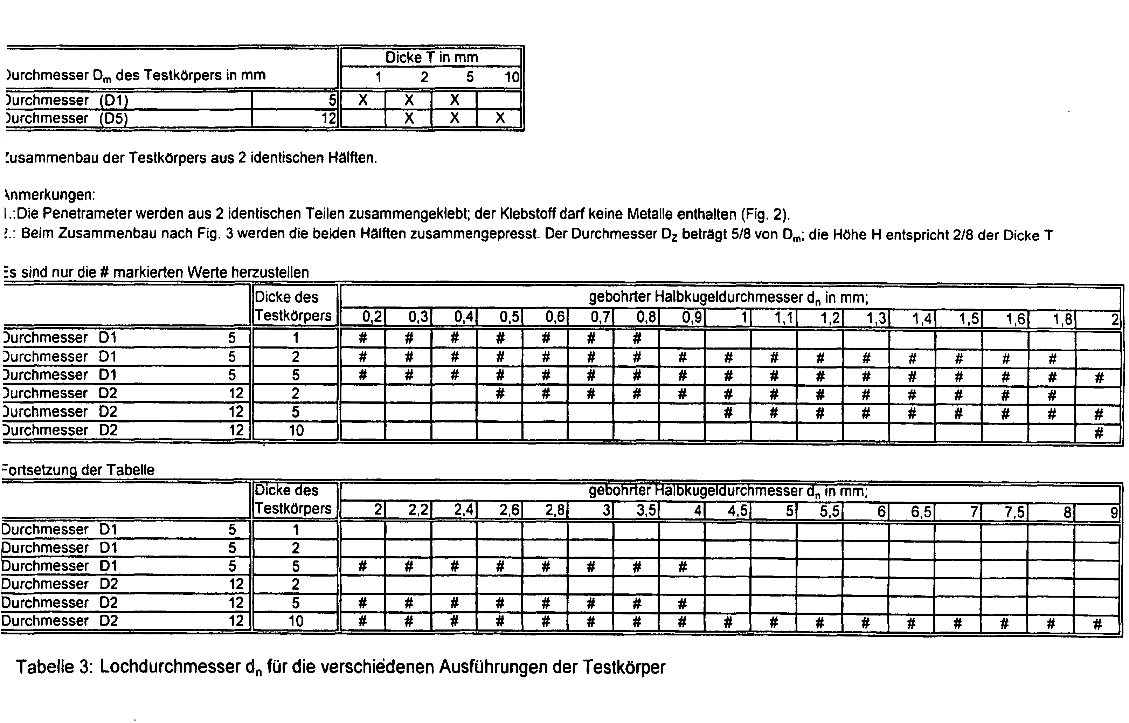

Nach einer weiteren Ausführungsform kann für die klebefreie Montage in das eine Testkörperstück ein etwas größeres kreisringförmiges Einsatzstück 16 eingelegt werden, das dann mit dem anderen Testkörperstück, welches eine kreisringförmige Aussparung 15 besitzt, verpresst wird. Fig. 3 zeigt den prinzipiellen Aufbau.

Um Fehlergruppen simulieren zu können, können auch mehrere Löcher gleichen oder unterschiedlichen Durchmessers eingebracht werden (siehe Fig.4 a+b). Bei der Verwendung von unterschiedlichen Durchmessern kann mit einem Testkörper die Fehlererkennbarkeitsgrenzgröße ermittelt werden.

Grundsätzlich ist der erfindungsgemäße Testkörper zylinder- oder stabförmig, so daß mittels einer zum Außendurchmesser identischen Bohrung der Testkörper in ein zu prüfendes Gußteil formschlüssig eingebracht werden kann. Das so präparierte zu prüfende Gußteil kann dann als Vermessungsteil einer Röntgenanlage genutzt werden. Beim Durchlauf durch die Anlage ergibt sich eine Aussage, ob Fehler dieser Größe von der Anlage zuverlässig detektiert werden können.

Die Vorteile der erfindungsgemäßen Verwendung eines Testkörpers sind folgende:
- Die detektierbare Fehlergröße ist unabhängig von der Durchstrahlungsrichtung (da kugelförmige 3D Hohlräume)
- Fehlerapproximation in 3D statt 2D; Meßkörper für 3D Eichung mit Potential für 3D Fehlertiefenvermessung von Fehlern
- Testkörper testet sowohl die Bildqualität vom Detektor als auch die Detektion durch die Software
- Optional können Gruppen von gleichen Hohlräumen eingebracht werden, um z.B. Lunkernester zu simulieren; nur so kann die Gruppenfehlererkennung gemessen werden
- Ebenfalls optional können Gruppen von unterschiedlichen Hohlräumen eingebracht werden, um so die Erkennbarkeitsgrenze mit einem Testobjekt zu erfassen (ähnlich Linienraster bei 2D)
- Testkörper sind in großen Variationen leicht, preisgünstig und reproduzierbar herzustellen.

## Patentansprüche

1. Verwendung eines zylinderförmigen Testkörpers mit einem oder mehreren kugelförmigen Hohlräumen zur Prüfung der Funktion und Fehlererkennungsqualität von Systemen zur automatischen Erkennung von Defekten in Gußteilen, der auf oder in dem zu prüfenden Gußteil befestigt wird.

2. Verfahren zum Herstellen eines zylinderförmigen Testkörpers mit einem oder mehreren kugelförmigen Hohlräumen gemäß folgenden Schritten:
a1: Einstanzen von kreisförmigen Löchern, deren Durchmesser die Form einer Kugel optimal approximieren, in die Mitte einer Vielzahl von Folienlagen, die aus dem Material eines zu prüfenden Gußstückes bestehen,
b1: übereinander Anordnen der Vielzahl von Folienlagen mit den eingestanzten Löchern, wobei angrenzend an die Folienlagen mit dem kleinsten Loch Folienlagen ohne Loch übereinander gelegt werden,
c1: Zusammenpressen oder Verkleben der übereinander liegenden Vielzahl von Folienlagen,
oder
a2: Vorsehen von zwei identischen zylinderförmigen Testkörperstücken mit gleichem Durchmesser,
b2: Hineinbohren einer identischen halbkugelförmigen Aussparung in einer Stirnseite jedes zylinderförmigen Testkörperstücks,
c2: Zusammenbau mittels Verkleben der Testkörperstücke an ihren Stirnseiten,
oder
b3: Vorsehen einer kreisringförmigen Ausnehmung in einem Testkörperstück und Vorsehen eines entsprechenden kreisringförmigen Einsatzstückes gegenüberliegend auf einem anderen Testkörperstück, sowie Hineinbohren einer halbkugelförmigen Aussparung in gegenüberliegende Seiten des Testkörperstücks bzw. des kreisringförmigen Einsatzstückes, und
c3: Hineinpressen des kreisringförmigen Einsatzstückes in die kreisringförmige Ausnehmung.

3. Verfahren nach Anspruch 2, **dadurch gekennzeichnet, daß** die Verklebung der Testkörperstücke mit einem metallfreien Klebstoff erfolgt.

4. Verfahren nach Anspruch 2, **dadurch gekennzeichnet, daß** der Durchmesser (D_{z}) der Aussparung 5/8 des Durchmessers (Dₘ) der Testkörperstücke beträgt, und daß die Höhe (H) 2/8 der Dicke (T) beträgt.

5. Verfahren nach Anspruch 2 und/oder 4, **dadurch gekennzeichnet, daß** die Durchmesser im oberen gebohrten Teil (15) und im unteren gefrästen Teil (16) so dimensioniert sind, daß zwischen diesen Teilen ein Preßsitz gegeben ist.

## Claims

1. Use of a cylindrical test body with one or more spherical cavities for testing the function and defect recognition quality of systems for the automatic recognition of defects in castings, which is attached to or in the casting to be tested.

2. Method for producing a cylindrical test body with one or more spherical cavities according to the following steps:
a1: punching of circular holes, the diameters of which optimally approximate the shape of a sphere, into the middle of a plurality of foil layers which consist of the material of a casting to be tested,
b1: stacking of the plurality of foil layers with the punched holes, foil layers without a hole being stacked next to the foil layers with the smallest hole,
c1: pressing or gluing together of the stacked plurality of foil layers,
or
a2: provision of two identical cylindrical test-body pieces with the same diameter,
b2: boring of an identical hemispherical hollow into an end surface of each cylindrical test-body piece,
c2: assembly by means of gluing of the test-body pieces at their end surfaces,
or
b3: provision of an annular recess in one test-body piece and provision of a corresponding opposite annular insert on another test-body piece, and boring of a hemispherical hollow into opposite sides of the test-body piece or of the annular insert, and
c3: pressing of the annular insert into the annular recess.

3. Method according to claim 2, **characterized in that** the test-body pieces are glued together with a metal-free adhesive.

4. Method according to claim 2, **characterized in that** the diameters (D_{z}) of the hollow amounts to 5/8 of the diameter (Dₘ) of the test-body pieces, and **in that** the height (H) amounts to 2/8 of the thickness (T).

5. Method according to claim 2 and/or 4, **characterized in that** the diameters in the upper bored part (15) and in the lower milled part (16) are dimensioned to give a press fit between these parts.

## Revendications

1. Méthode d'utilisation d'un objet de test cylindrique doté d'une ou de plusieurs cavités sphériques pour contrôler le fonctionnement et la qualité de la détection d'erreurs de systèmes de détection automatique de défauts dans des pièces moulées, qui est fixé dans ou sur la pièce moulée à contrôler.

2. Méthode pour la réalisation d'un objet de test cylindrique doté d'une ou de plusieurs cavités sphériques suivant les étapes suivantes :
a1 : perforation de trous circulaires dont les différents diamètres s'approchent de façon optimale de la forme d'une sphère, au milieu d'une pluralité de couches en feuilles, composées du matériau d'une pièce moulée à contrôler,
b1 : disposition de façon superposée de la pluralité de couches en feuilles avec les trous perforés, les couches en feuilles sans trou étant disposées de façon superposée à côté des couches en feuilles présentant le plus petit trou,
c1 : compression ou collage de la pluralité de couches en feuilles superposées,
ou
a2 : préparation de deux objets de test cylindriques identiques de même diamètre,
b2 : perçage d'un évidement hémisphérique identique dans une face avant de chaque objet de test cylindrique,
c2 : assemblage par collage des objets de test au niveau de leurs faces avant,
ou
b3 : préparation d'un évidement circulaire dans un objet de test et préparation d'un insert circulaire correspondant opposé sur l'autre objet de test ainsi que perçage d'un évidement hémisphérique des côtés opposés de l'objet de test et/ou de l'insert circulaire, et
c3 : compression de l'insert circulaire dans l'évidement circulaire.

3. Méthode selon la revendication 2, **caractérisée en ce que** le collage des objets de test se fait à l'aide d'une colle exempte de métal.

4. Méthode selon la revendication 2, **caractérisée en ce que** le diamètre (D_{z}) de l'évidement fait 5/8 du diamètre (Dₘ) des objets de test et que la hauteur (H) fait 2/8 de l'épaisseur (T).

5. Méthode selon la revendication 2 et/ou 4, **caractérisée en ce que** les diamètres de la partie (15) percée supérieure et de la partie (16) fraisée inférieure sont dimensionnés de manière à ce qu'il y ait un ajustement sans jeu entre ces parties.
